**Europäisches Patentamt**

(19) **European Patent Office**

**Office européen des brevets**

(11) Numéro de publication: **0 004 989**

**B1**

(12) **FASCICULE DE BREVET EUROPEEN**

(45) Date de publication du fascicule de brevet: **23.09.81**

(51) Int. Cl.³: **B 23 K 13/02**

(21) Numéro de dépôt: **79200165.3**

(22) Date de dépôt: **04.04.79**

(54) Installation de soudage par induction pour la fabrication de tubes.

(30) Priorité: **13.04.78 US 896361**

(43) Date de publication de la demande:
**31.10.79 Bulletin 79/22**

(45) Mention de la délivrance du brevet:
**23.09.81 Bulletin 81/38**

(84) Etats Contractants Désignés:
**BE CH DE FR GB IT LU NL SE**

(56) Documents cités:
**BE - A - 836 000**
**DE - B - 1 142 671**
**FR - A - 715 078**
**FR - A - 716 232**
**US - A - 3 270 176**
**US - A - 3 397 295**

(73) Titulaire: **ELPHIAC Société anonyme dite:**
**54, Chaussée de Charleroi**
**B-1060 Bruxelles (Saint-Gilles) (BE)**

(72) Inventeur: **Cuvelier, Michel**
**20, rue Eracle**
**B-4000 Liège (BE)**

(74) Mandataire: **Bossard, Franz et al,**
**ACEC - Service des Brevets Boîte Postale 4**
**B-6000 Charleroi (BE)**

Courier Press, Leamington Spa, England.

## Installation de soudage par induction pour la fabrication de tubes

La présente invention a pour objet une installation de soudage par induction pour la fabrication de tubes à des vitesses sensiblement plus élevées que celles obtenues jusqu'à présent. L'invention s'applique principalement aux tubes en acier inoxydables, mais des tubes en d'autres métaux peuvent être soudés aussi avec avantage dans l'installation suivant l'invention.

Des installations de soudage par induction pour la fabrication de tubes sont en soi connues et décrites, par exemple dans les brevets US 1 365 198 ou US 2 687 464. Elles comprennent des moyens pour transporter une ébauche de tube à souder à travers une bobine d'induction reliée à un générateur de courant alternatif. Les courants induits engendrés dans l'ébauche de tube servent à l'échauffement des bords jusqu'à une température suffisante au soudage de ceux-ci sous l'effet d'une force qui les presse l'une contre l'autre, exercée par une filière ou par des galets de forgeage situés en aval de la bobine d'induction.

Selon le brevet belge BE 836 000, une telle installation pour le soudage de tubes comprend en outre un concentrateur externe coiffé par l'inducteur et terminé par un bec qui s'introduit dans l'espace entre les galets de forgeage.

Selon le brevet US 3 397 295, une telle installation comprend un concentrateur externe qui au contraire coiffe l'inducteur à l'endroit de la fente de l'ébauche de tube. Elle comprend, en outre, un concentrateur interne de longueur plus grande que la distance entre l'extrémité amont de la bobine d'induction et les axes des galets de forgeage.

L'installation de soudage suivant l'invention a pour but de garantir une très haute concentration du courant de chauffage à l'endroit des lèvres déterminant la fente de l'ébauche de tube et de maintenir cette haute concentration notamment à proximité du point de soudage. Un autre but de l'invention est d'obtenir un rendement élevé du chauffage par induction ou ce qui revient au même d'assurer un couplage étroit entre bobine d'induction et ébauche de tube. Ce rendement élevé peut être obtenu, dans des cas les plus divers, grâce à des dispositifs de support réglables.

Pour atteindre de tels buts, l'installation suivant l'invention est caractérisée en ce que le concentrateur interne comprend un empilage de tôles magnétisables orientées parallèlement à l'axe et parallèlement au diamètre du tube passant par la fente de l'ébauche et en ce que le concentrateur externe est constitué par un corps conducteur d'électricité disposé en face de l'extrémité aval du concentrateur interne, en aval de la bobine d'induction et en amont du plan passant par les axes des galets de forgeage.

L'invention est expliquée ci-dessous par rapport à un exemple d'une forme d'exécution en se référant au dessin annexé.

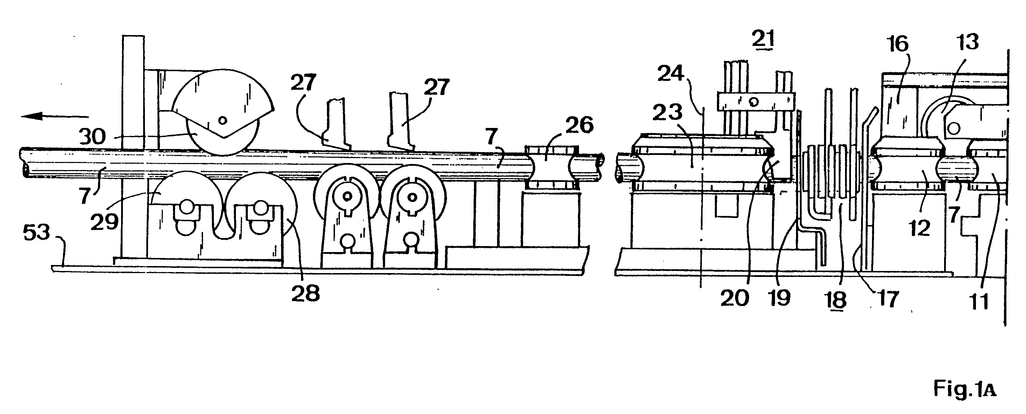

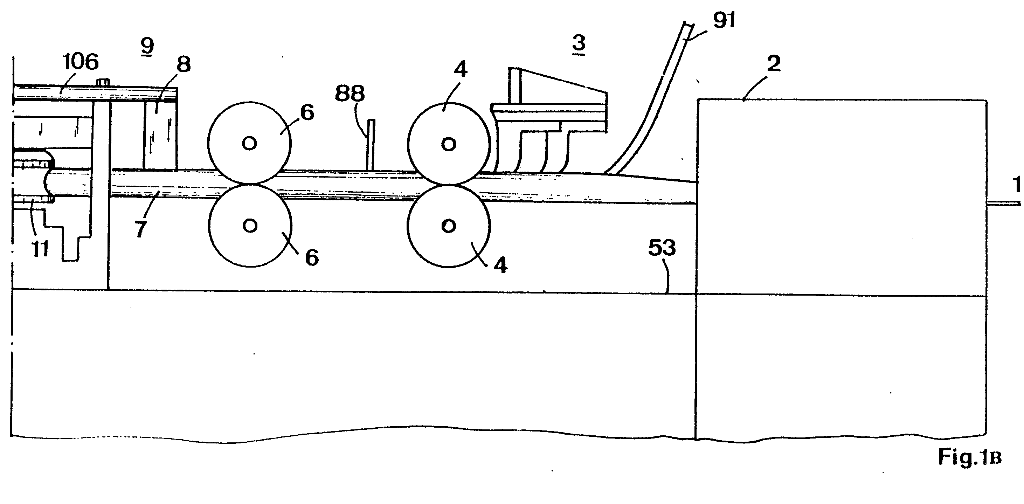

Le figures 1A et 1B sont les deux parties d'une seule et même vue en élévation d'une installation de soudage de tubes suivant l'invention.

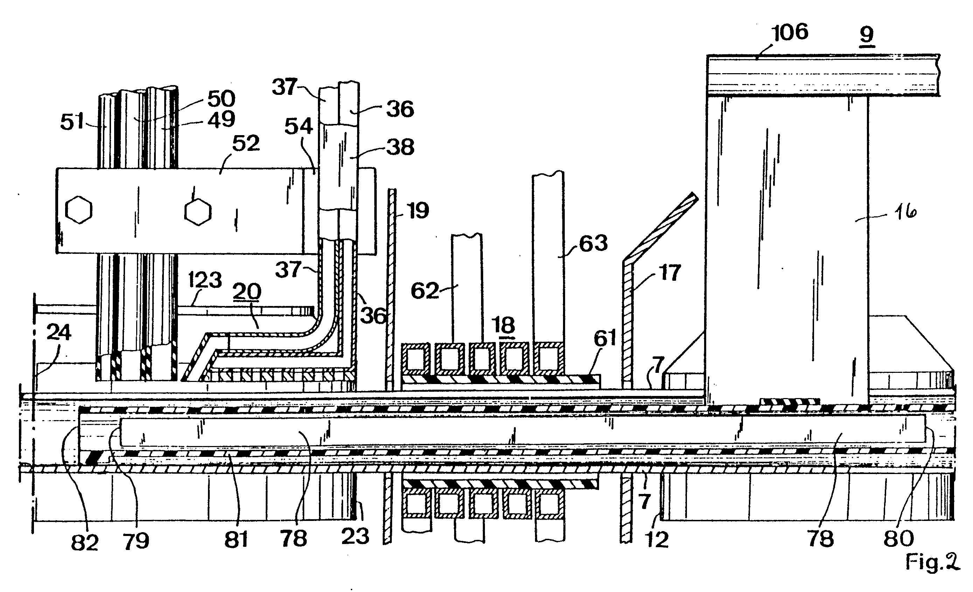

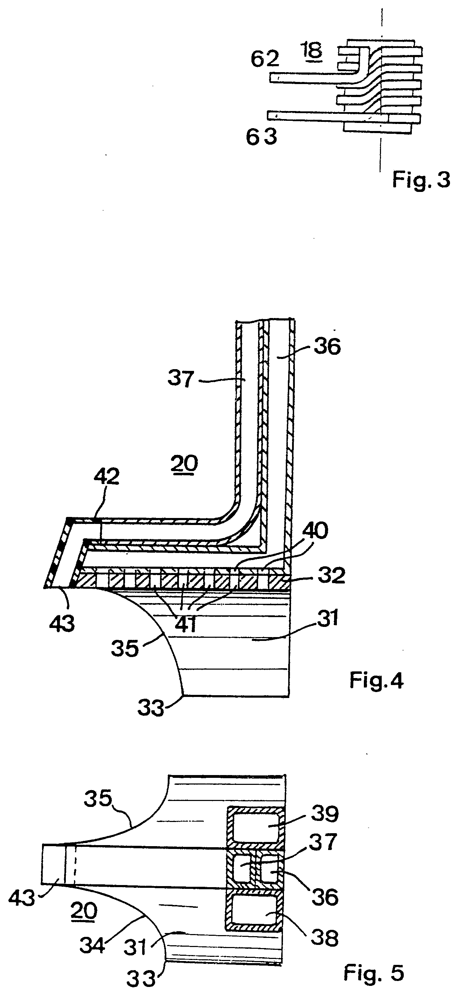

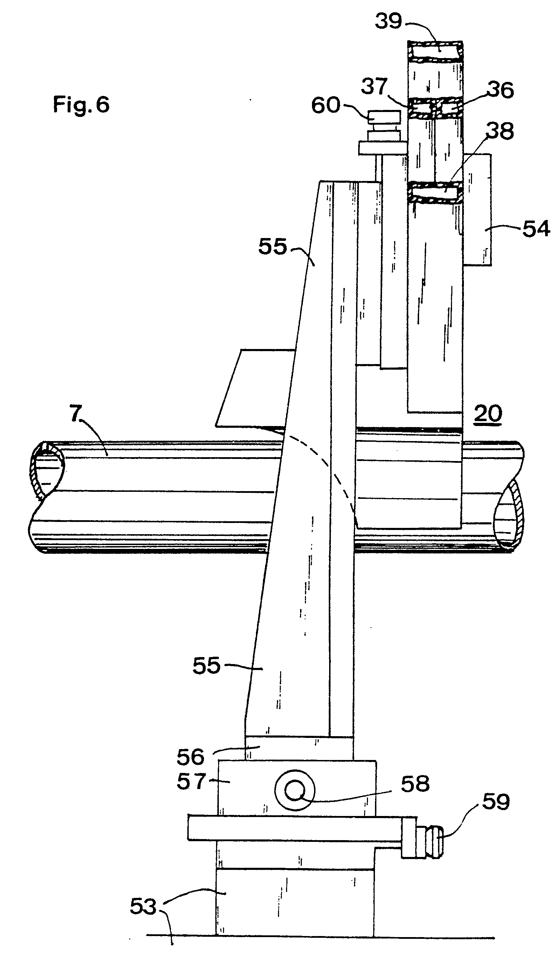

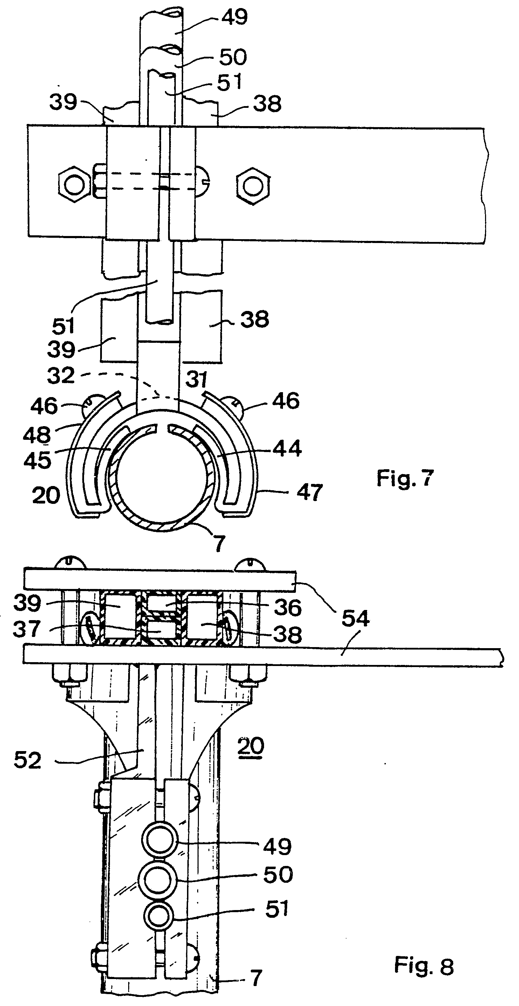

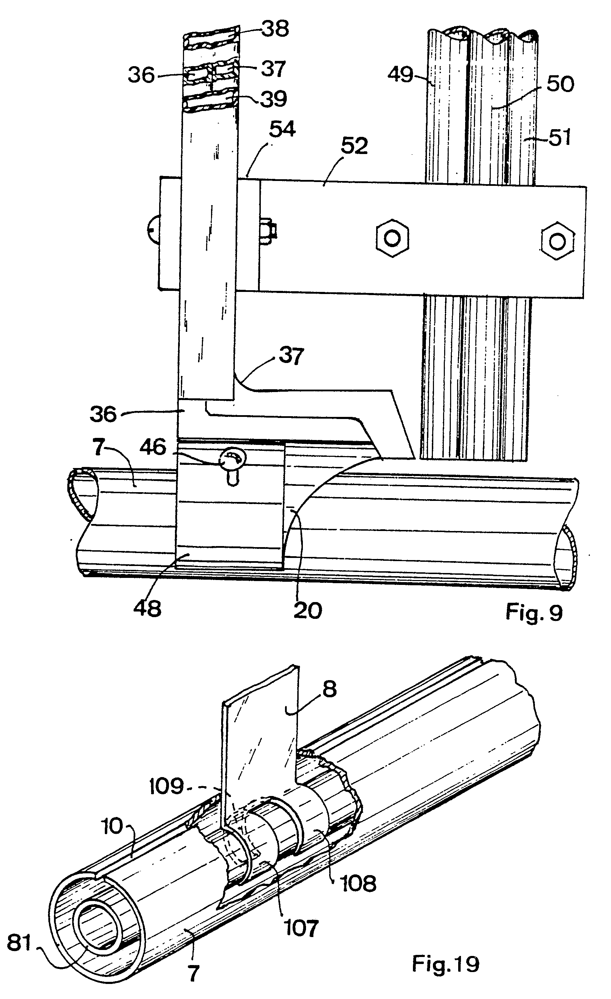

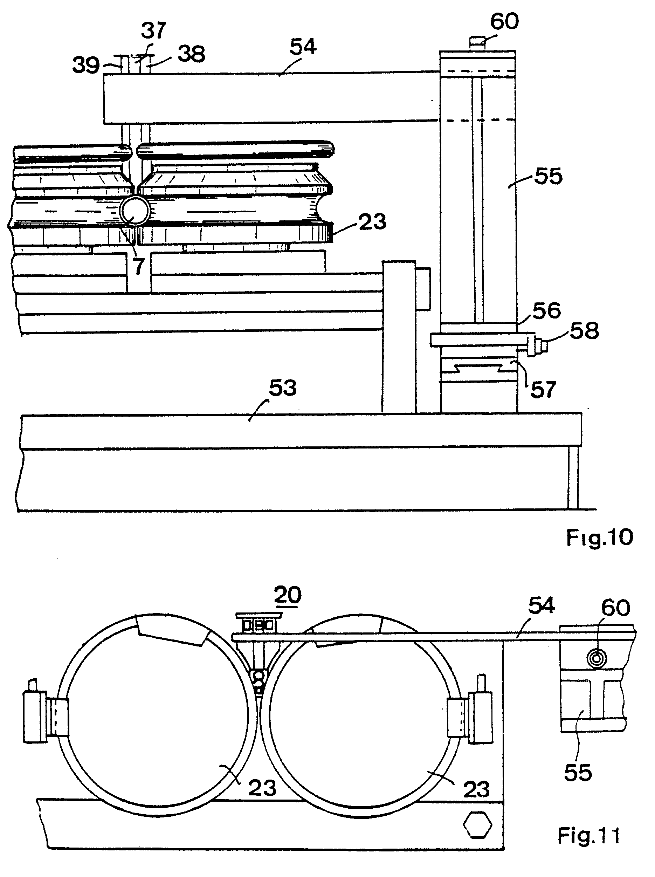

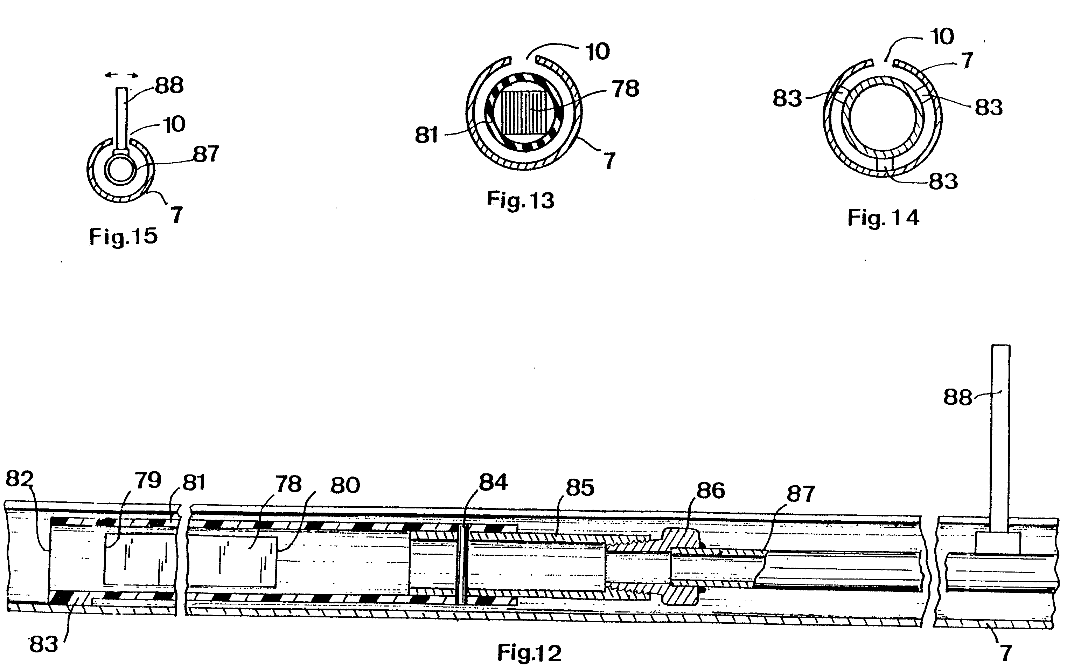

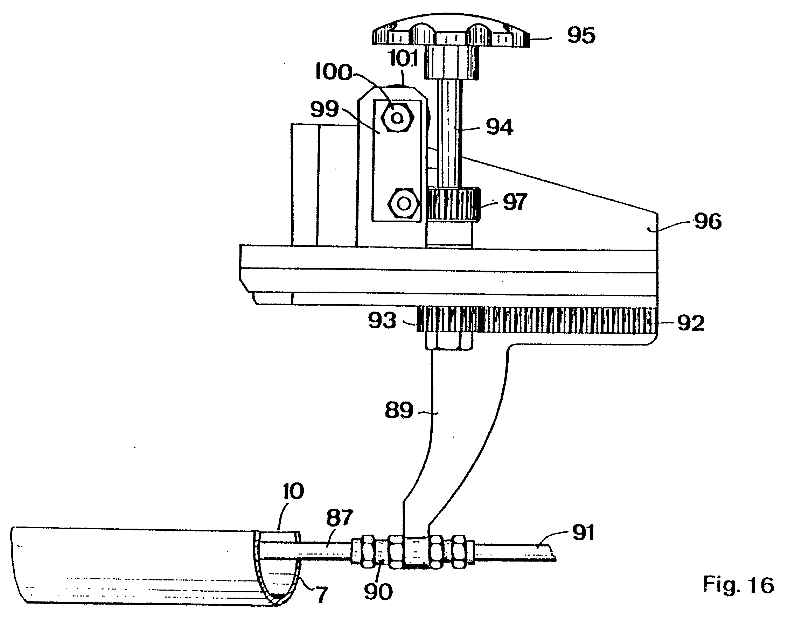

La figure 2 est une vue en coupe de l'installation de soudage de tubes montrée aux figures 1A et 1B au voisinage de la bobine d'induction. La figures 3 est une vue de la bobine d'induction du côté opposé à la fente. Les figures 4 et 5 sont des vues coupe et en plan d'un concentrateur externe. La figure 6 représente un dispositif de montage du concentrateur externe. Les figures 7, 8 et 9 sont des vues en coupe, en plan et en élévation du concentrateur externe. La Figure 10 est une vue en élévation et la figure 11 une vue en plan d'un dispositif support du concentrateur externe. Les figures 12, 13, 14 et 15, sont une vue en coupe longitudinale et plusieurs vues en coupe transversales d'un concentrateur interne. Les figures 16, 17, 18, et 19 sont des vues d'un dispositif support et de commande de la position du concentrateur interne.

Les dessins ne montrent pas des détails d'isolation de montage et de liaison qui sont évidents pour l'expert et ne constituent pas des caractéristiques de l'invention.

Les figures 1A et 1B sont destinées à être assemblées le long des lignes à droite de la figure 1A et à gauche de la figure 1B pour constituer une seule figure. Côté amont, à droite, une bobine alimentaire, non représentée, fournit un ruban 1 de tôle en acier inoxydable. Cette tôle traverse d'abord une partie 2 de l'installation où se trouvent divers galets de formage non décrits en détail, parce qu'ils ne font pas partie de l'invention. Ensuite, plus vers l'aval, se trouve un dispositif support et de commande 3 de la position d'un concentrateur interne décrit plus en détail ultérieurement. Au delà du dispositif 3 se trouvent deux paires de galets de formage 4 et 6. A la sortie des galets de formage 6, la tôle présente la forme d'une ébauche de tube 7. Un peut plus loin, une lame de support amont 8 d'un dispositif de support et de stabilisation 9 d'un concentrateur interne passe à travers une fente 10 entre les bords de l'ébauche de tube 7. L'ébauche de tube traverse ensuite deux paires de galets de formage 11 et 12 entre lesquels un galet 13 à flasques métalliques assure la position correcte de l'ébauche 7 et règle la largeur de la fente 10 (figure 1A et 19). Immédiatement après le galet 13 une lame de support 16 du dispositif support 9 du concentrateur interne passe à travers la fente 10 à la hauteur des galets de formage 12.

Un peu plus loin, en direction aval, un écran en matériau conducteur d'électricité 17 percé d'un trou légèrement plus grand que la section de l'ébauche de tube 7 est disposé à proximité et en amont d'une bobine d'induction 18 décrite en détail ultérieurement. La bobine d'induction engendre des courants de Foucault dans l'ébauche de tube 7. Ces courants chauffent les bords de la fente 10 et les portent à la température de soudage.

Un autre écran 19 en matériau conducteur d'électricité est disposé en aval de la bobine d'induction 18. Au delà de cet écran 10 est disposé un concentrateur externe 20 décrit en détail ultérieurement. Le concentrateur externe 20 sert de support à un système de tubes 21 d'alimentation de gas inerte qui est soufflé sur l'ébauche de tube 7 entre la bobine d'induction 18 et une paire de galets de forgeage 23. Certains des tubes 21 véhiculent un réfrigérant pour le concentrateur externe 20, par exemple de l'eau de refroidissement.

Les galets de forgeage 23 pressent l'un contre l'autre les bords de l'ébauche de tube 7 en un point voisin à un plan 24 passant par les axes des galets 23. En aval des galets de forgeage 23, des galets de serrage 26 sont prévus. Ils ont pour effet de stabiliser convenablement l'ébauche de tube 7 dans la région amont, c'est-à-dire à l'endroit des galets de forgeage 23. Ensuite l'installation est classique et comprent des outils de grattage 27 pour enlever la surépaisseur du cordon de soudure, et d'autres galets 28, 29, 30 qui conduisent le tube fini vers une station de découpage, non représentée.

Les composants de l'installation qui sont responsables des avantages de l'invention et notamment du fait de permettre le soudage de tubes en acier inoxydable à des vitesses particulièrement élevées sont le concentrateur interne, le concentrateur externe, la bobine d'induction, les dispositifs de support et de commande de position du concentrateur interne, les dispositifs de protection des galets de forgeage et le système de stabilisation de l'ébauche de tube au cours de son défilement à travers l'installation de soudage.

Le concentrateur externe 20 montré aux figures 1A, 2 et 4 à 9 est une pièce métallique, non magnétique, mais conductrice d'électricité, par exemple en cuivre. Il est disposé au dessus de la fente 10 de l'ébauche de tube 7 entre la bobine d'induction 18 et le plan 24 passant par les axes des galets de forgeage 23. La forme du concentrateur externe est montrée aux figure 4, 5 et 7. Le concentrateur 20 est constitué par un corps cintré 31 qui s'étend le long du contour de l'ébauche de tube 7 de part et d'autre d'une région supérieure centrale 32 recouvrant la fente 10. Le plan de symétrie du concentrateur externe 20 passe par l'axe longitudinal de l'ébauche de tube 7. A l'extrémité amont du concentrateur externe (à droite aux figures 4 et 5) le corps 31 enveloppe l'ébauche de tube sur un angle mesurant environ 240° (figure 7). Cette extension angulaire est maintenue jusqu'à un point 33 en aval de l'extrémité amont. A partir du point 33 l'extension angulaire du corps 31 diminue de sorte que son bord suit des courbes 34 et 35 montrées en plan à la figure 4 et 5 et en élévation à la figure 4. Comme on peut le voir sur la figure 11, le concentrateur externe 20 occupe un espace en forme de coin entre les galets de forgeage 23 et présente des parties appelées jupes à bords courbes qui s'étendent latéralement à partir de la région centrale 32.

Le concentrateur externe 20 supporte, ou inversement est supporté, par un ensemble de quatre tubes 36, 37, 38 et 39 solidarisés avec lui à la partie supérieure. Le tube 36 se termine par une partie horizontale fixée à la région supérieure centrale 32. Cette partie horizontale comprend une série d'ouvertures 40 qui communiquent avec des ouvertures 41 dans le concentrateur 20. Ces ouvertures 40 et 41 permettent de souffler un gaz inerte, par exemple de l'argon dans l'espace sous le concentrateur externe et d'écarter l'oxygène de l'air de la zone de soudage. Un apport supplémentaire d'argon est introduit par le tube 37 qui se termine en un bec de soufflage en matériau isolant électrique 42 à l'extrémité aval 43 du concentrateur. Les tubes 38 et 39 servent à véhiculer un fluide réfrigérant, par exemple de l'eau qui arrose les jupes du concentrateur externe. Les tubes 36 à 39 sont de préférence en cuivre et réunies en un seul paquet par brasure. Un agencement supplémentaire du concentrateur externe est constitué par une paire de volants 44 et 45 montrés à la figure 7. Les volants 44 et 45 sont fixés aux jupes par des vis 46 et des plaques de serrage 47 et 48 et rentrent à l'intérieur des jupes pour s'appliquer élastiquement sur l'ébauche de tube 7. Ainsi, les volants 44 et 45 empâchent l'argon de s'échapper de l'espace en dessous du concentrateur et l'obligent de lécher les bords de la fente 10.

De l'argon supplémentaire est amené en outre par des tubes 49,50 et 51 disposés en amont et à proximité immédiate de l'étranglement entre les galets de forgeage 23 afin d'exclure l'oxygène de la zone de soudage. Les tubes 49, 50 et 51 réalisés en polytétrafluoréthylène par exemple, sont solidarisés avec le paquet de tubes 36, 37, 38 et 39 par exemple au moyen d'un collier de serrage 52 (figure 8).

Le concentrateur externe 20 est supporté à partir d'un bâti 53 de l'installation par l'intermédiaire d'un dispositif de positionnement permettant des ajustements fins dans les trois dimensions x, y, z. Pour ce faire, le paquet de tubes 36 à 39 est fixé à une barre 54 (figures 2, 6, 10 et 11) monté sur une colonne 55. La colonne 55 est solidaire d'un coulisseau 56, lui-même relié à un coulisseau 57. Le mouvement (direction x) entre le coulisseau 56 et son support 57 est commandé par une vis mère 58. Le mouvement (direction y) du coulisseau 57 par rapport au bâti 53 est perpendiculaire au mouvement entre les éléments 56 et 57 et est également commandé par une vis mère 59. Le mouvement entre la barre 54 et la colonne 55 (direction verticale z) est également commandé

**0 004 989**

par une vis mère 60.

La bobine d'induction 18 comprend cinq spires d'un tube à section carrée parcouru par de l'eau de refroidissement. Les spires de la bobine 18 sont enroulées sur un support isolant 61, par exemple en polytétrafluoréthylène dont l'alésage est légèrement plus grand que la section de l'ébauche de tube 7. Les spires de la bobine 18 sont disposés dans plans verticaux perpendiculaires à l'axe de l'ébauche 7. Elles sont reliées entr'elles et à l'alimentation par des portions de conducteur 62, 63 disposées du côté opposé à la fente 10 de l'ébauche (Figure 3).

La bobine 18 doit être maintenue rigidement à sa place par rapport à l'axe longitudinal de l'ébauche de tube 7 et le plan 24 passant par les axes des galets de forgeage.

Le concentrateur interne est représenté aux figures 2 et 12 à 15. Il se trouve à l'intérieur de l'ébauche de tube 7. Le concentrateur interne comprend un noyau en un empilage de bandes de tôle 78 en matériau magnétisable telles qu'utilisées pour des transformateurs. Les plans de tôles doivent être verticaux, c'est-à-dire être parallèles à un plan passant par l'axe longitudinal de l'ébauche 7 et la fente 10. L'extrémité aval 79 du noyau 78 du concentrateur est ajustée à une position déterminée en amont du plan 24 passant par les axes des galets de forgeage 23. L'extrémité amont 80 du noyau 78 du concentrateur se trouve en amont de la bobine d'induction 18 d'une longueur au moins égale à la longueur de la bobine 18.

Le noyau 78 du concentrateur est logé à serrage dans un tube 81 un matériau isolant électrique par exemple en polytétrafluoréthylène. A l'extrémité aval 82 du tube 81 un dispositif de centrage tel que montré à la figure 14 est prévu, constitué par des tétons de guidage 83. Un fluide réfrigérant est véhiculé à travers l'ébauche de tube 7 d'une part dans l'espace entre la surface intérieure de l'ébauche et la surface extérieure du tube 81 et d'autre part dans l'espace entre la surface intérieure du tube 81 et le noyau 78.

En amont de l'extrémité 80 du concentrateur interne, le tube 81 est relié de manière non rotative, à l'aide d'un goujon 84 à un autre tube 85 qui peut être en un matériau conducteur d'électricité (figure 12). Ensuite, à l'aide d'un raccord 86, le tube 85 est relié à un autre tube 87 faisant partie du dispositif support et de commande 3 de la position du concentrateur interne, déjà montré à la figure 1B. A un endroite déterminé en amont du noyau du concentrateur, un doigt 88, indicateur de pivotement du noyau est monté sur le tube 87. Ce doigt 88 (figure 15) est plus mince que la largeur de la fente 10 par lequel il passe. Il peut exécuter des mouvements de pivotement autour de l'axe longitudinal de l'ébauche 7 d'au moins 10° pour indiquer si le noyau tourne par rapport à la position imposée. Si le tube 87 est fermement maintenu à son extrémité amont dans un raccord 90 (figure 16) et si le doigt 88 se trouve sur le tube 87 à mi-chemin entre le noyau 78 et le raccord 90, l'angle de rotation indiqué par le doigt 88 représente une fraction de l'angle de torsion du noyau 78, déterminée par les caractéristiques de torsion du noyau 78 et des tubes 81, 85 et 87.

Le dispositif de commande 3 de la position du concentrateur interne montré à la figure 1B a pour but d'une part de fixer la position exacte de l'extrémité aval 79 du noyau du concentrateur par rapport au plan 24 et d'autre part de permettre le retrait du noyau du concentrateur à une distance déterminée du plan 24 lors du démarrage de l'installation, ceci afin d'éviter des surchauffes de l'ébauche de tube 7 à proximité de la bobine 18 et du concentrateur externe 20 lors du démarrage.

Selon les figures 16, 17 et 18, le tube 87 est fixé à un bras 89 au moyen du raccord 90. Le tube 87, prolongé par un tube 91 vers un réservoir, véhicule un fluide réfrigérant pur le concentrateur interne. Le bras 89 est supporté par une crémaillère 92 dans laquelle engrène un pignon 93. Le pignon 93 se trouve sur un arbre 94 d'une manivelle 95. Tous ces éléments sont montés sur une structure de support 96 solidaire du bâti 53. Un autre pignon 97 sur le même arbre 94 engrène avec une crémaillère 98 reliée par un bras 99 à une tige de piston 100 d'un vérin pneumatique ou hydraulique 101 également monté sur le support 96. Un tige filetée 102 prolonge la crémaillère 98 et est munie d'une rondelle d'arrêt 103 qui peut être verrouillée au moyen d'une vis de blocage 104. La tige 102 traverse librement une ouverture dans une traverse 105 solidaire de la structure support 96.

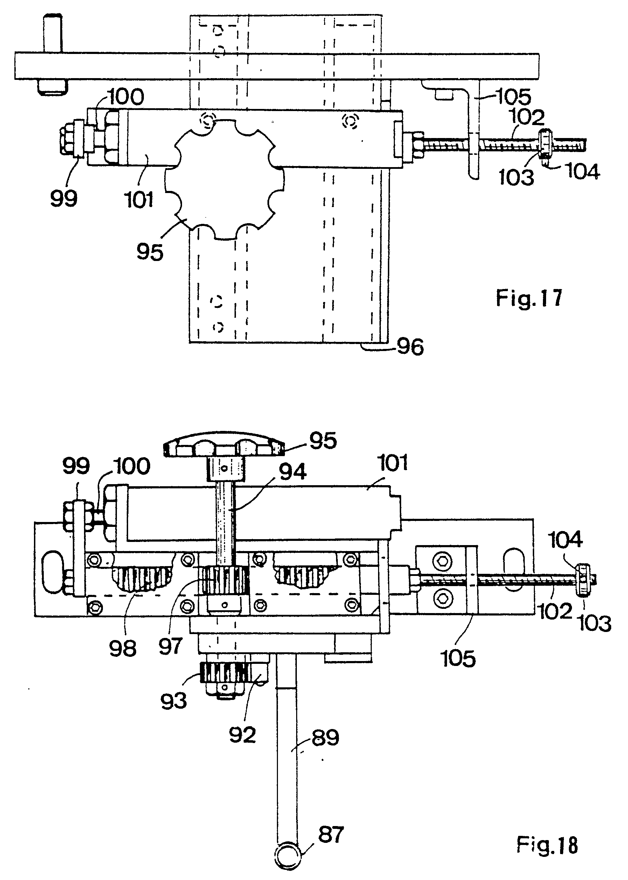

En actionnant dans une première direction le vérin 101 par un dispositif de commande hydraulique ou pneumatique approprié, non représenté, la crémaillère 98 est déplacée vers la droite (figures 17 et 18 et la concentrateur interne est retiré dans une position amont (figure 16 à droite). En actionnant le vérin 10 dans la direction opposée, la crémaillère 98 se déplace vers la gauche (figures 17 et 18) jusqu'à ce que la rondelle d'arrêt 103 bute sur la traverse 105. La position de cette rondelle d'arrêt est ajustée de telle manière que le concentrateur interne s'arrête à une distance déterminée en amont du plan 24. La manivelle 95 permet de déplacer le con-centratéur lors de l'ajustement de la position de la rondelle d'arrêt 103.

Le dispositif 9 de support et de stabilisation de la position du concentrateur interne montré aux figures 1B et 19 a pour but de maintenir le noyau 78 du concentrateur dans l'alignement de l'axe de l'ébauche de tube 7. Pour ce faire une barre de support 106 est fixée de manière rigide au bâti 53 de l'installation. A cette barre 106 sont fixées les lames de support amont 8 et aval 16. Chaque lame de support 8 et 16 est en polyfluoréthylène, suffisamment mince pour traverser la fente 10 (voir figure 19). Les extrémités inférieures des lames 8 et 16 sont fendues en plusieurs portions 107, 108, 109 écartées dans des directions opposées de manière à entourer le tube 81 sur au moins un peu plus que la moitié de la circonférence.

Le serrage entre les lames 8 et 16 et le tube 81 est un serrage à friction qui permet le glissement du tube 81 en direction amont ou aval suivant le mouvement imposé par le dispositif de commande de position 3. Le serrage à friction n'emêche pas, non plus le pivotement du tube 81 bien qu'il oppose une résistance à de tels pivotements.

L'alimentation de la bobine d'induction 18 se fait par un courant de 50 000 Hz, mais est choisie de préférence dans la gamme de 30 000 à 90 000 Hz pour les tubes d'un diamètre extérieur d'environ 25mm.

Les résultats excellents obtenus par l'installation notamment lors du soudage de tubes en acier inoxydable semblent être dûs notamment à une concentration de champs électromagnétiques particulièrement favorable à proximité du point de soudage ainsi qu'à une excellente stabilisation géométrique de ce point de soudage. L'élément principal semble être le concentrateur interne et sa coopération avec le concentrateur externe.

**Revendications**

1. Installation de soudage par induction pour la fabrication de tubes comprenant une bobine d'induction (18) entourant une ébauche de tube (7) dont les bords déterminent une fente (10) qui se rétrécit vers l'aval, des galets de forgeage (23) disposés en aval de la bobine d'induction (18) appliquant l'une contre l'autre les bords chauffés de l'ébauche (7) à l'endroit d'un point de soudage situé à proximité du plan (24) passant par les axes des galets de forgeage (23), un concentrateur externe (20) et un concentrateur (78), interne, de longueur plus grande que la distance entre l'extrémité amont de la bobine d'induction (18) et les axes des galets de forgeage (23), disposé à l'intérieur de l'ébauche, caractérisé en ce que le concentrateur interne (78) comprend un empilage de tôles magnétiques orientées parallèlement à l'axe et parallèlement au diamètre passant par la fente (10) de l'ébauche de tube (7), et en ce que le concentrateur externe (20) est constitué par un corps conducteur (31) d'électricité disposé en face de l'extrémité aval du concentrateur interne (78), en aval de la bobine d'induction (18) et en amont du plan passant par les axes des galets de forgeage (23).

2. Installation suivant la revendication 1, caractérisée en ce qu'elle comprend des dispositifs de support, tels des lames de support (8, 16) pour supporter avec précision le concentrateur interne (78) et stabiliser sa position, constitués par au moins une portion de ruban mince (8, 16) s'étendant à travers la fente (10) de l'ébauche de tube (7).

3. Installation suivant la revendication 2, caractérisée en ce qu'elle comprend des dispositifs de support et de commande ou de stabilisation (3, 9, 89, 92, 93, 106) pour déplacer et guider de manière précise le concentrateur interne (78) par l'intermédiaire de ses dispositifs ou lames de support (8, 9, 16).

4. Installation suivant la revendication 1, caractérisée en ce que la surface intérieure du concentrateur externe (20) et la surface intérieure de la bobine d'induction (18) se trouve à même distance de la surface extérieure de l'ébauche de tube (7).

5. Installation suivant une des revendications 1 ou 4, caractérisée en ce que le concentrateur externe (20) comprend des jupes qui s'étendent latéralement de la partie centrale (32) disposée à l'endroit où défile la fente (10) de l'ébauche de tube (7).

6. Installation suivant la revendication 5, caractérisée en ce que les jupes du concentrateur externe (20) à la partie amont de celui-ci s'étendent sur plus de la moitié de la circonférence de l'ébauche de tube (7), sans l'envelopper complètement.

7. Installation suivant la revendication 6, caractérisée en ce que la longueur des jupes du concentrateur externe (20) raccourcit entre l'extrémité amont de celui-ci et son extrémité aval suivant des courbes (34,35) déterminée par la forme des galets de forgeage (23) à l'extrémité aval du concentrateur externe (20).

8. Installation suivant une des revendications précédentes, caractérisée en ce que le concentrateur externe (20) est en un matériau amagnétique, bon conducteur d'électricité tel que le cuivre ou l'aluminium.

9. Installation suivant une des revendications précédentes, caractérisée en ce que le concentrateur externe (20) est maintenu dans un dispositif support (54 à 60) muni de moyens pour ajuster sa position dans toutes les directions transversales par rapport à l'axe de l'ébauche de tube (7) et dans la direction parallèle à cet axe.

10. Installation suivant une des revendications 1 à 3 caractérisée en ce que la bobine d'induction (18) est composée de spires disposées dans des plans verticaux à l'axe de l'ébauche de tube et du concentrateur interne (78), ces spires étant reliées entr'elles et à l'alimentation par des portions de conducteur disposées du côté opposé au côté où se trouve la fente (10) de l'ébauche de tube (7).

11. Installation suivant une des revendications précédentes, caractérisée en ce que les interstices entre les spires de la bobine (18) et/ou des trous (40,41) ménagés dans le concentrateur externe (20) servent à injecter du gaz de protection inerte ou réducteur dans l'espace entre l'ébauche de tube (7) et la bobine et/ou le concentrateur externe (20).

12. Installation suivant une des revendications précédentes, caractérisée en ce que des galets de serrage (26) en ava des galets de forgeage (23) stabilisent la fente (10) l'ébauche de tube (7) par rapport au plan de symétrie vertical du concentrateur interne (78).

## Claims

1. Induction welding installation for the manufacture of tubes, comprising an induction coil (18) surrounding a tube blank (7), the edges of which delimit a slit (10) which narrows downstream, forging rollers (23) located downstream of the induction coil (18), which apply the heated edges of the blank (7) against one another at the location of the welding point located in the vicinity of the plane (24) passing through the axes of the forging rollers (23), an outer concentrator (20) and an inner concentrator (78), having a length greater than the distance between the upstream end of the induction coil (18) and the axes of the forging rollers (23), said inner concentrator being located on the inside of the blank, characterised in that the inner concentrator (78) comprises a stack of magnetic metal sheets directed parallel to the axis and parallel to the diameter passing through the slit (10) in the tube blank (7), and in that the outer concentrator (20) consists of an electrically conductive body (31) located opposite the downstream end of the inner concentrator (78), downstream of the induction coil (18) and upstream of the plane passing through the axes of the forging rollers (23).

2. Installation according to Claim 1, characterised in that it comprises supporting devices, such as supporting strips (8, 16), to support the inner concentrator (78) precisely and to stabilise its position, these consisting of at least one portion of thin strip (8, 16) extending through the slit (10) in the tube blank (7).

3. Installation according to Claim 2, characterised in that it comprises supporting and controlling or stabilising devices (3, 9, 89, 92, 93, 106) for displacing and guiding precisely the inner concentrator (78) by means of its supporting devices or strips (8, 9, 16).

4. Installation according to Claim 1, characterised in that the inner surface of the outer concentrator (20) and the inner surface of the induction coil (18) are located at the same distance from the outer surface of the tube blank (7).

5. Installation according to one of Claims 1 or 4, characterised in that the outer concentrator (20) comprises skirts which extend laterally from the central part (32) located in the place where the slit (10) in the tube blank (7) passes.

6. Installation according to Claim 5, characterised in that the skirts of the outer concentrator (20), in the part upstream of the latter, extend over more than half the circumference of the tube blank (7), without surrounding it completely.

7. Installation according to Claim 6, characterised in that the length of the skirts of the outer concentrator (20) shortens between the upstream end of the latter and its downstream end, according to curves (34, 35) defined by the shape of the forging rollers (23) at the downstream end of the outer concentrator (20).

8. Installation according to one of the preceding Claims, characterised in that the outer concentrator (20) is made of non-magnetic material which is a good conductor of electricity, such as copper or aluminium.

9. Installation according to one of the preceding Claims, characterised in that the outer concentrator (20) is held in a supporting device (54 to 60) provided with means for adjusting its position in all the transverse directions relative to the axis of the tube blank (7) and in the direction parallel to this axis.

10. Installation according to one of Claims 1 to 3, characterised in that the induction coil (18) is composed of turns located in planes perpendicular to the axis of the tube blank and of the inner concentrator (78), these turns being connected to one another and to the supply source by conductor sections which are located on the side opposite the side on which the slit (10) in the tube blank (7) is situated.

11. Installation according to one of the preceding Claims characterised in that the gaps between the turns of the coil (18) and/or holes (40, 41) made in the outer concentrator (20) serve to inject inert protective gas or reducing gas into the space between the tube blank (7) and the coil and/or the outer concentrator (20).

12. Installation according to one of the preceding Claims, characterised in that clamping rollers (26) downstream of the forging rollers (23) stabilise the slit (10) in the tube blank (7) in relation to the vertical plane of symmetry of the inner concentrator (78).

## Patentansprüche

1. Induktionsschweißanlage zur Herstellung von Rohren, mit einer Induktionsspule (18), die einen Rohrrohling (7) umgibt, desser Ränder einen Schlitz (10) bestimmen, der sich nach stromabwärts verengt, mit stromabwärts von der Induktionsspule (18) angeordneten Schmiederollen (23), welche die erhitzten Ränder des Rohlings (7) an der Stelle eines Schweißpunktes, der sich in der Nähe der durch die Achsen der Schmiederollen (23) erstreckenden Ebene (24) befindet, gegeneinander drückt, mit einer externen Bündelungseinrichtung (20) und einer internen, im Inneren des Rohlings angeordneten Bündelungseinrichtung (78), deren Länge größer ist als der Abstand zwischen dem stromaufwärts gelegenen Ende der Induktionsspule (18) und den Achsen der Schmiederollen (23), dadurch gekennzeichnet, daß die interne Bündelungseinrichtung (78) einen Stapel Magnetbleche umfaßt, die parallel zur Achse und parallel zu dem Durchmesser, der durch den Schlitz (10) des Rohrrohlings (7) hindurchgeht, orientiert sind, und daß die externe Bündelungseinrichtung (20) aus einem elektrisch leitenden Körper (31) gebildet ist, der genenüber dem stromabwärts gelegenen Ende der internen Bündelungseinrichtung (78), stromabwärts von der Induktionsspule (18) und stromaufwärts von der Ebene, die durch die Achsen der Schmiederollen (23) geht, angeordnet ist.

2. Anlage nach Anspruch 1, dadurch gekennzeichnet, daß sie Stützvorrichtungen wie Stützplatten (8, 16) zur präzisen Halterung der internen Bündelungseinrichtung (78) und Stabilisierung ihrer Position umfaßt, die durch wenigstens einen Teil eines Dünnen Bandes (8, 16) gebildet sind, das sich durch den Schlitz (10) des Rohrrohlings (7) erstreckt.

3. Anlage nach Anspruch 2, dadurch gekennzeichnet, daß sie Vorrichtungen zur Halterung und Steuerung oder Stabilisierung (3, 9, 89, 92, 93, 106) zum präzisen Verschieben und Führen der internen Bündelungseinrichtung (78) über diese Vorrichtungen bzw. Stützplatten (8, 9, 16) umfaßt.

4. Anlage nach Anspruch 1, dadurch gekennzeichnet, daß die Innenoberfläche der externen Bündelungseinrichtung (20) und die Innenoberfläche der Induktionsspule (18) denselben Abstand von der Außenoberfläche des Rohrrohlings (7) haben.

5. Anlage nach Anspruch 1 oder 4, dadurch gekennzeichnet, daß die externe Bündelungseinrichtung (20) Schenkel aufweist, die sich seitlich von dem mittleren Teil (32) erstrecken, welcher an der Stelle angeordnet ist, wo der Schlitz (10) des Rohrrohlings (7) vorbeiläuft.

6. Anlage nach Anspruch 5, dadurch gekennzeichnet, daß die Schenkel der externen Bündelungseinrichtung (20) an ihrem stromaufwärts gelegenen Teil sich über mehr als die Hälfte des Umfangs des Rohrrohlings (7) erstrecken, ohne diesen vollständig zu umgeben.

7. Anlage nach Anspruch 6, dadurch gekennzeichnet, daß die Länge der Schenkel der externen Bündelungseinrichtung (20) zwischen deren stromaufwärts gelegenem Ende und ihrem stromabwärts gelegenen Ende gemäß Kurven (34, 35) abnimmt, die durch die Form der Schmiederollen (23) am stromabwärtsseitigen Ende der externen Bündelungseinrichtung (20) bestimmt sind.

8. Anlage nach einem der vorstehenden Ansprüche, dadurch gekennzeichnet, daß die externe Bündelungseinrichtung (20) aus unmagnetischem, elektrisch gut leitenden Werkstoff wie Kupfer oder Aluminium gebildet ist.

9. Anlage nach einem der vorstehenden Ansprüche, dadurch gekennzeichnet, daß die externe Bündelungseinrichtung (20) in einer Halterungseinrichtung (54 bis 60) gehalten ist, die mit Mitteln zur Einstellung ihrer Position in allen Transversalrichtungen in bezug auf die Achse des Rohrrohlings (7) und in einer Richtung parallel zu dieser Achse versehen ist.

10. Anlage nach einem der Ansprüche 1 bis 3, dadurch gekennzeichnet, daß die Induktionsspule (18) aus Windungen gebildet ist, die in zur Achse des Rohrrohlings und der internen Bündelungseinrichtung (78) senkrechten Ebenen liegen, wobei diese Windungen untereinander und mit der Spiesequelle durch Leiterteile verbunden sind, die auf der Seite angeordnet sind, welche der Seite gegenüberliegt, auf der sich der Schlitz (10) des Rohrrohlings (7) befindet.

11. Anlage nach einem der vorstehenden Ansprüche, dadurch gekennzeichnet, daß die Zwischenräume zwischen den Windungen der Spule (18) und/oder Löcher (40, 41) in der externen Bündelungseinrichtung (20) zum Einströmen eines inerten oder reduzierenden Schutzgases in den Raum zwischen dem Rohrrohling (7) und der Spule und/oder der externen Bündelungseinrichtung (20) dienen.

12. Anlage nach einem der vorstehenden Ansprüche, dadurch gekennzeichnet, daß Spannrollen (26) stromabwärts von den Schmiederollen (23) den Schlitz (10) des Rohrrohlings in bezug auf die senkrechte Symmetrieebene der internen Bündelungseinrichtung (78) stabilisieren.

Fig.1A

Fig.1B

0 004 989

Fig.2

0 004 989

62  18

63

Fig. 3

36

37

20

42

40

32

41

43

35  31

33

Fig. 4

35

39

37

36

43

20

38

34  31

33

Fig. 5

4

Fig. 6

0 004 989

Fig. 7

Fig. 8

6

Fig. 9

Fig. 19

Fig.10

Fig.11

Fig.15

Fig.13

Fig.14

Fig.12

Fig. 16

0 004 989

Fig.17

Fig.18